# FASCICULE DE BREVET EUROPEEN

(11) **EP 0 662 051 B1**
(45) Date de publication et mention de la délivrance du brevet: **14.05.1997**
(21) Numéro de dépôt: 94922296.2
(22) Date de dépôt: 22.07.1994
(51) Int. Cl.: B60J 7/08

(54) **DISPOSITIF DE TOIT OUVRANT POUR VEHICULE AUTOMOBILE**
VORRICHTUNG FÜR EIN ZU ÖFFNENDES DACH FÜR KRAFTFAHRZEUG
SUNROOF DEVICE FOR A MOTOR VEHICLE

(30) Priorité: 22.07.1993 FR 9309028
(43) Date de publication de la demande: 12.07.1995
(73) Titulaire: FARNIER & PENIN SNC, F-79300 Bressuire (FR)
(72) Inventeur: CHAUVIN, René, F-79300 Bressuire (FR); JEUFFRAY, Jean-Marie, F-79300 Terves (FR)
(74) Mandataire: Robert, Jean-Pierre
(86) Numéro de dépôt international: FR9400922
(87) Numéro de publication internationale: WO9503189

(56) Documents cités:
- GB-A- 2 056 380
- US-A- 3 965 566
- US-A- 4 205 875
- US-A- 5 193 874

## Description

La présente invention concerne un dispositif de toit ouvrant pour véhicule automobile comportant un volet, en principe une glace transparente, obturant une ouverture ménagée dans le pavillon du véhicule et pouvant soit basculer pour réaliser une ouverture par entrebâillement soit dégager au moins partiellement cette ouverture.

Il existe plusieurs types de toit ouvrant pour véhicule automobile. Tous comportent un cadre qui borde une ouverture ménagée dans le pavillon du véhicule et un panneau qui est mobile par rapport à ce cadre entre une position où il obture de manière étanche l'ouverture du pavillon et une seconde position où il dégage une partie de cette ouverture. Dans le dispositif le plus simple le panneau est articulé au cadre par son bord avant et le bord arrière est attelé à un dispositif de manoeuvre en basculement du panneau autour de son articulation avant. Ce dispositif de manoeuvre est en général un mécanisme type grenouillère ou une sorte de vérin à vis manoeuvré manuellement depuis l'habitacle du véhicule. Cette manoeuvre permet donc d'entrebâiller le panneau par rapport au cadre. Dans la plupart des cas, l'articulation du panneau au cadre est démontable de même que sa fixation au dispositif de manoeuvre. On peut donc ainsi complètement retirer le panneau et disposer d'une ouverture complète dans le pavillon du véhicule. Cette faculté n'est que rarement utilisée par les usagers d'un véhicule car il faut pouvoir loger le panneau ainsi démonté dans le véhicule. Ce panneau est en général encombrant et mal commode à manipuler. En outre lorsqu'il est formé par une glace, sa manipulation peut présenter des risques de casse.

Il existe également des dispositifs beaucoup plus complexes dans lesquels, entre le cadre et le panneau existe une armature secondaire formée par des coulisses télescopiques qui sont articulées au cadre à l'avant pour obtenir l'entrebâillement de l'ensemble glace et coulisses, la glace pouvant en outre coulisser par rapport au cadre soit sous le plan du cadre soit au-dessus de celui-ci après une première manoeuvre d'entrebâillement. Il est alors possible de découvrir dans une certaine mesure l'ouverture bordée par le cadre. Ces dispositifs complexes sont en général chers et de ce fait, peu prisés par la clientèle.

La présente invention entend offrir une solution avantageuse du point de vue économique pour assurer les deux fonctions d'un toit ouvrant, à savoir l'entrebâillement pour ménager une ouverture d'aération ou la découverte pratiquement totale de l'ouverture afin de disposer d'un ciel ouvert.

A cet effet l'invention a donc pour objet un dispositif de toit ouvrant pour véhicule automobile comprenant un cadre fixé au bord d'une ouverture ménagée dans le pavillon du véhicule, une glace formant dans une première position un panneau d'obturation de cette ouverture, des moyens d'articulation de cette glace solidaires du bord avant du cadre pour recevoir de manière démontable des moyens correspondant fixés sur la glace et des moyens de commande en pivotement de la glace autour de son articulation sur le cadre, s'étendant entre le bord arrière du cadre et la glace de laquelle ils peuvent être au moins partiellement séparés. Selon l'une des caractéristiques principales de l'invention le cadre et la glace possèdent des moyens d'accouplement de l'un à l'autre, en attente, et mis en coopération mutuelle lorsque la glace, découplée des moyens d'articulation et séparée au moins partiellement des moyens de pivotement, est placée dans une seconde position où elle chevauche le bord arrière du cadre.

Ainsi le dispositif de l'invention présente la simplicité d'un toit ouvrant simple par pivotement unique. Il présente en outre l'avantage important par rapport à ce dispositif simple d'offrir un emplacement pour le rangement de ce panneau lorsqu'on souhaite découvrir largement l'ouverture, emplacement qui est situé en grande partie au-dessus du pavillon, grâce aux moyens d'accouplement en attente au moins entre le cadre et le panneau, le panneau ainsi retiré ne venant pas encombrer' l'habitacle ou la malle du véhicule.

Les moyens en attente permettant de fixer le panneau au véhicule dans sa position découplée, peuvent être réalisés de nombreuses manières différentes. Il faut cependant noter que la partie de ces moyens d'accouplement solidaire de la glace sera avantageusement disposée au sommet d'un triangle dont l'un des côtés est parallèle au bord du cadre chevauché par la glace, les moyens d'accouplement portés par le cadre étant au moins égal au nombre de deux pour coopérer avec ceux de la glace situés aux extrémités du côté du triangle parallèle aux bords du cadre chevauché. C'est en effet une condition importante à respecter pour, lorsque la glace est extraite du cadre, que sa stabilité dans sa deuxième position soit assurée.

Les moyens d'accouplement de la glace au pavillon dans la position de la glace extraite du cadre peuvent être séparés de ceux qui permettent l'obturation du cadre et l'ouverture par entrebâillement mais il sera avantageux d'utiliser au moins en partie les moyens que comportent le cadre et la glace pour assurer cette obturation et cet entrebâillement.

Ainsi dans un premier mode de réalisation, les moyens d'accouplement portés par la glace et situés aux extrémités du côté du triangle parallèle au bord du cadre chevauché sont constitués par ses moyens d'articulation au bord avant du cadre, le cadre comportant au voisinage de son bord arrière des moyens correspondant pour les recevoir.

Dans un second mode de réalisation, les moyens d'accouplement portés par la glace et situés aux extrémités du côté du triangle parallèle au bord du cadre chevauché comprennent des crochets latéraux susceptibles d'être engagés dans des crochets correspondants solidaires des bords du cadre adjacents au bord chevauché.

Dans un troisième mode de réalisation, les moyens d'accouplement portés par la glace et situés aux extrémités du côté du triangle parallèle au bord du cadre sont constitués par des patins latéraux de guidage de la glace dans des rails latéraux portés par le cadre, la plus grande longueur de ces rails assurant le guidage de la glace dans son mouvement de la première vers la deuxième position et dans son mouvement inverse, la partie arrière de ces rails constituant des moyens de réception en attente coopérant avec les patins pour l'accouplement de la glace et du cadre dans la seconde position de la glace.

Pour ces trois modes de réalisation le troisième moyen d'accouplement de la glace au cadre est constitué par la partie des moyens de commande en pivotement de la glace solidaire du cadre et par un moyen de son attelage à la glace porté par cette dernière en correspondance. Dans une variante, ce moyen est une réplique du moyen que comporte la glace au voisinage de son bord arrière pour coopérer avec le vérin à vis qui permet de l'entrebâiller.

Dans une seconde variante de réalisation le moyen d'attelage de la glace aux moyens de commande en pivotement est constitué par une glissière médiane portée par la face inférieure de la glace dans laquelle l'extrémité libre des moyens de commande en pivotement est montée en permanence en coulissement. On comprend qu'ainsi la glace peut être partiellement découplée de ces moyens qui coopèrent avec l'extrémité arrière de cette glissière dans la première position de la glace pour la plaquer contre le cadre et son joint et fermer l'ouverture et qui coopèrent avec l'extrémité avant de la glissière dans la seconde position de la glace pour l'assujettir fermement au cadre en la tirant vers le bas alors qu'elle chevauche le bord arrière du cadre. Dans cet état, la glace est fermement appuyée sur le cadre par les patins, crochets ou autres prévus latéralement à l'extrémité du côté du triangle susdit et par la glissière qui porte sur le bord arrière du cadre garni à cet effet d'un protecteur souple. On notera que cette glissière médiane, c'est-à-dire parallèle au sens de déplacement de la glace et au milieu de celle-ci, constitue également un guide à ce déplacement lorsqu'on fait changer la glace de position.

Dans une troisième variante de réalisation le troisième moyen d'accouplement de la glace est constitué par la partie des moyens de commande en pivotement de la glace par rapport au cadre portée par la glace et par un organe de son attelage porté par le pavillon du véhicule au-delà du bord du cadre chevauché. Ce moyen peut être rapporté au pavillon par rivetage ou par tout moyen de fixation permanent ou temporaire comme par exemple le collage ou même une fixation au moyen de rubans textiles à effet d'agrippage comme ceux connus commercialement sous l'appellation "velcro".

Dans un autre mode de réalisation de l'invention, la glace comporte au voisinage de son bord avant une réplique de la partie d'attelage des moyens de commande de son pivotement par rapport au cadre, le bord arrière du cadre comportant sur sa face extérieure des patins d'appui de la glace et le pavillon comportant un organe pour recevoir la partie des moyens de commande en pivotement portés par la glace. Dans ce cas il existe deux moyens d'attelage de la glace de part et d'autre du bord chevauché et la glace repose fermement sur ce bord chevauché grâce aux patins d'appui.

D'autres caractéristiques et avantages de l'invention ressortiront de la description donnée ci-après à titre d'exemple de plusieurs modes de réalisation.

Il sera fait référence aux dessins annexés dans lesquels :
- la figure 1 est une vue schématique d'un toit ouvrant à basculement dont le panneau est démontable conformément à l'art antérieur,
- La figure 2 illustre par une vue de dessus une réalisation schématique du toit ouvrant de l'invention,
- La figure 3A est une vue schématique en coupe suivant la ligne A-A de la figure 2,
- La figure 3B est une vue en coupe schématique selon la ligne B-B de la figure 2,
- La figure 4 est une vue en coupe selon la ligne IV-IV de la figure 2,
- La figure 5 est une vue en coupe d'un deuxième mode de réalisation du toit selon l'invention dans sa position d'ouverture,
- La figure 6 est une vue en coupe d'un troisième mode de réalisation du toit ouvrant de l'invention dans sa position d'ouverture,
- la figure 7 illustre par une vue schématique de dessus une autre réalisation d'un toit ouvrant selon l'invention,
- la figure 8 est une vue en coupe schématique des moyens d'articulation découplables de la glace au cadre,
- la figure 9 est une vue en coupe schématique de la coopération de la glace et des moyens de commande de son pivotement par l'intermédiaire d'une glissière, la glace étant dans sa deuxième position.

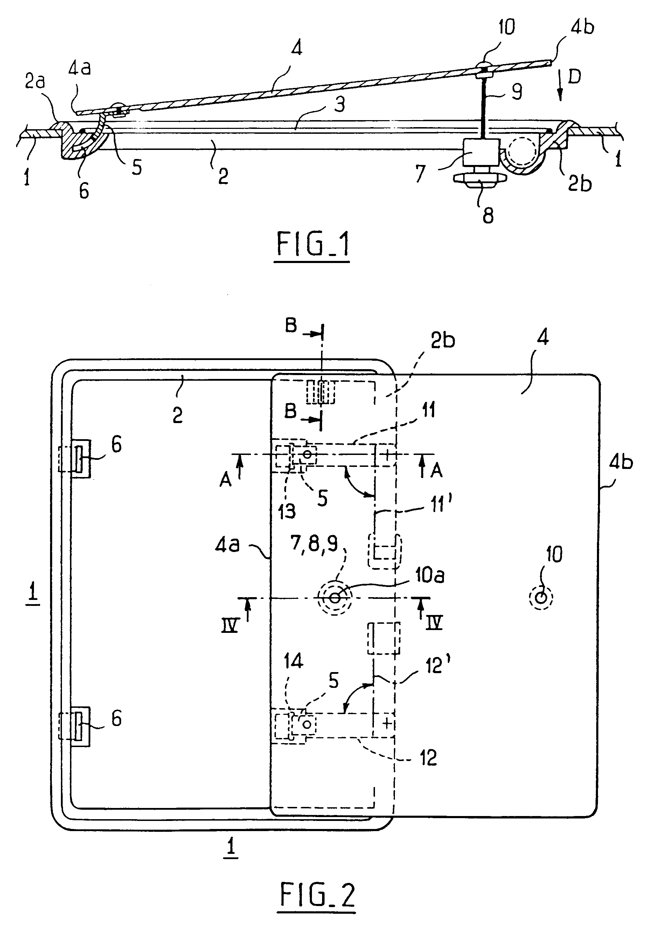

En référence à la figure 1 le pavillon 1 du véhicule automobile est pourvu d'une ouverture bordée par un cadre 2. Un contre-cadre non représenté permet de pincer le cadre 2 sur les bords de l'ouverture du pavillon 1 du véhicule. Le cadre 2 comporte un élément d'étanchéité 3 destiné à être plaqué entre le cadre 2 et un panneau 4 d'obturation de l'ouverture bordée par le cadre 2. Ce panneau 4, généralement une glace, comporte au voisinage de son bord avant 4a des cuillères 5 pouvant coulisser dans les glissières courbes 6 solidaires du cadre 2 et formant une pseudo-articulation du panneau sur le cadre. Le bord arrière 2b du cadre comporte en son centre un dispositif 7 du genre vérin à vis manoeuvrable par une poignée 8 et attelé de manière démontable par son extrémité 9 à un élément de fixation 10 solidaire du panneau 4 au voisinage de son bord arrière 4b. Ce dispositif constitue le moyen d'actionnement en pivotement du panneau 4 par rapport au cadre 2 autour de son articulation 5, 6 sur le bord avant 2a de ce cadre pour, en rétraction, plaquer le panneau 4 contre le joint 3 du cadre 2 (flèche D) et en extension, entrebâiller ce panneau par rapport au plan du cadre pour créer une ouverture de ventilation de l'habitacle du véhicule.

Au moyen de ce toit ouvrant connu, lorsque l'on veut découvrir totalement l'ouverture du pavillon, on découple le panneau au niveau de la liaison 9, 10 démontable et on extrait les cuillères 5 de leurs logements 6, le panneau 4 pouvant être alors logé à l'intérieur du véhicule.

Conformément à l'invention le toit ouvrant comporte des moyens pour fixer le panneau 4 dans une position de découvrement de l'ouverture bordée par le cadre 2, en chevauchement du bord arrière 2b de ce dernier, ce qui évite de trouver un endroit dans le véhicule où le ranger.

A cet effet le bord arrière 2b du cadre comporte, dans un premier mode de réalisation de l'invention, deux bras pivotants 11, 12 depuis une position de rangement 11', 12' où ils sont disposés parallèlement au bord 2b vers une position de service 11, 12 où ils s'étendent perpendiculairement à ce bord 2b à l'intérieur de l'ouverture du cadre. Leur extrémité libre comporte des glissières 13, 14 semblables aux glissières 6 dans lesquelles on peut engager des cuillères 5 du panneau 4.

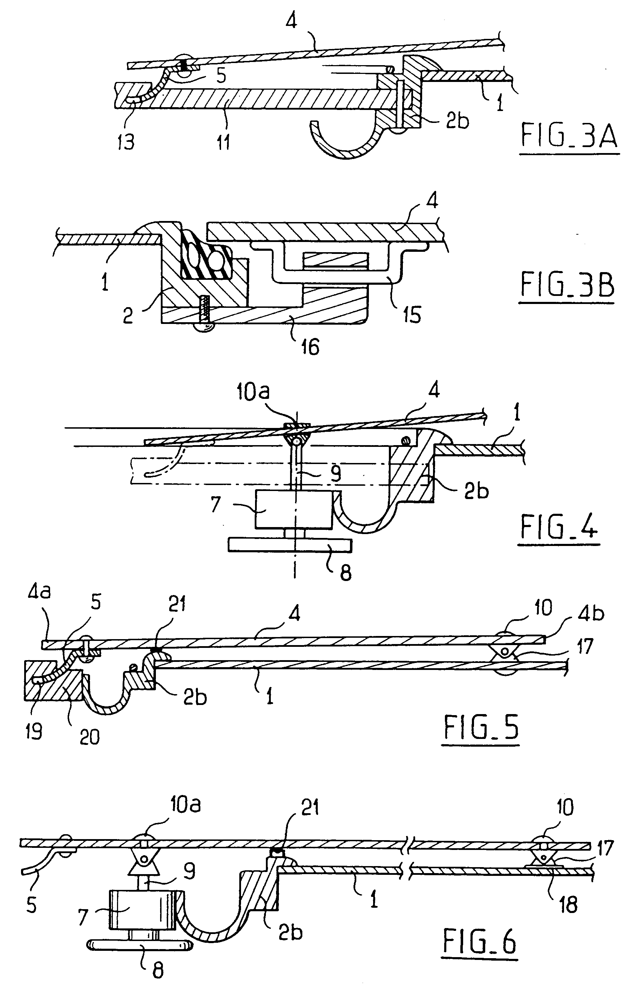

Le panneau 4 possède au voisinage de son bord avant 4a des moyens 10a semblables aux moyens 10 avec lesquels il peut être attelé au vérin de soulèvement 7 et qui se trouvent juste à l'aplomb de ce vérin 7 lorsque les cuillères 5 sont engagées dans les glissières 13 et 14 (voir figure 4). Les cuillères 5 et l'élément 10a de fixation solidaires du panneau 4 constituent les moyens en attente de ce panneau. Ces moyens sont destinés à coopérer avec les glissières 13, 14 des bras 11, 12 articulés et le vérin 7 qui constituent pour leur part d'autres moyens en attente solidaire du cadre 2. Lorsque le panneau 4 est découplé des glissières 6 et du vérin 7, il peut être, grâce à ses moyens en attente, réattelé dans une position fixe découvrant l'ouverture du cadre 2 et chevauchant le bord arrière 2b de ce dernier. Les cuillères 5 et l'élément de fixation 10a, comme illustré à la figure 2 sont situés au sommet d'un triangle dont un des côtés, celui joignant les deux cuillères 5, est sensiblement parallèle au bord 2b chevauché. Cette fixation par trois points assure une parfaite stabilité au panneau dans sa deuxième position par rapport au cadre.

Dans une variante de réalisation, au lieu d'utiliser les cuillères 5 comme moyen d'attente de la fixation du panneau 4 dans sa deuxième position par rapport au cadre 2, on aura prévu que le panneau 4 possède, en saillie sur sa face inférieure et au voisinage de chacun de ses coins avant, une sorte d'anse 15 comme illustré à la figure 3b qui peut être logée dans une ouverture en U portée par un bras 16 fixé au cadre 2 à chacun de ces bords adjacents au bord arrière 2b et faisant saillie à l'intérieur de l'ouverture pour intercepter l'anse 15 lorsque le panneau 4 est placé en chevauchement du bord 2b. Le troisième point de fixation peut être constitué par l'élément 10a porté par le panneau 4 en coopération avec le vérin 7, cet élément 10a étant uné réplique de l'élément 10.

Le troisième point de fixation du panneau dans sa position de découvrement du pavillon peut être constitué par un moyen en attente directement fixé sur le pavillon au-delà du bord 2b du cadre 2 comme illustré par la figure 5. Ce moyen de fixation pourra être par exemple une sorte de chape 17 rivée sur le pavillon et pouvant coopérer par brochage avec le moyen de fixation 10 prévu au voisinage du bord 4b sur le panneau 4. L'élément 17 peut être fixé par rivetage sur le pavillon 1 ou peut y être rapporté par collage ou même au moyen d'éléments d'accrochage mutuels tels que ceux connus sous le nom commercial "velcro" et représentés en 18 à la figure 6. Une telle fixation permet de reculer au maximum le panneau 4 par rapport au bord 2b du cadre afin de dégager une ouverture la plus grande possible. Dans ce cas les logements 19 susceptibles de recevoir les cuillères 5 peuvent être ménagés dans des pièces 20 directement solidaires du bord 2b du cadre. On aura remarqué à la figure 5 que le bord 2b possède sur sa face extérieure des patins 21 sur lesquels le panneau 4 peut être forcé en appui en le contraignant à une légère flexion pour mettre en concordance les moyens de fixation 10 et 17.

Enfin la figure 6 illustre schématiquement un autre mode de réalisation de l'invention dans lequel le vérin 7 coopère avec les moyens 10 de fixation prévus sur le panneau 4 au voisinage de son bord avant 4a tandis que les moyens 17 prévus sur le pavillon coopèrent avec les moyens de fixation 10 précédemment décrits. Au moyen du vérin 7 on peut alors contraindre le panneau 4 à s'appuyer fermement sur les patins 21 que porte le bord 2b arrière du cadre 2 ce qui assure la parfaite stabilité du panneau. Dans cette réalisation les patins 21 recouvrant le bord 2b du cadre 2 constituent avec les éléments de fixation 17 et 7 la triangulation nécessaire à la fixation du panneau 4 au pavillon du véhicule. On notera à cet égard que même dans les réalisations des figures 3a, 3b et 4, le bord arrière 2b du cadre peut constituer un appui pour le panneau en manoeuvrant le vérin 7 ce qui permet de rattraper tous les jeux de fixation et d'éviter des vibrations qui pourraient engendrer des bruits.

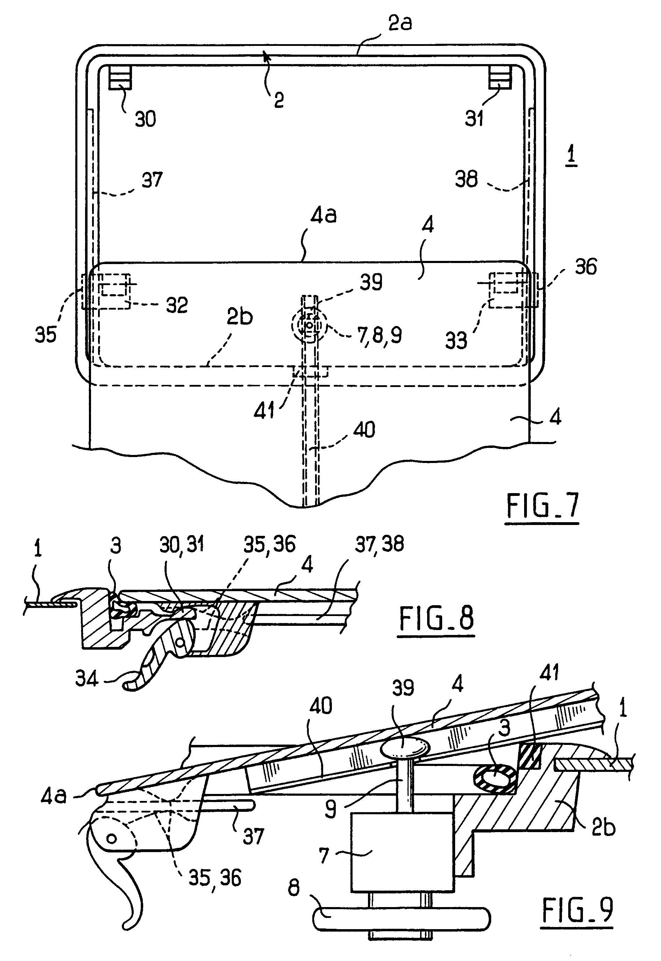

Aux figures 7 à 9 on retrouve certains des éléments décrits en regard des figures précédentes. Il s'agit d'un mode de réalisation qui, en plus de procurer des moyens de fixation de la glace 4 au cadre 2 dans sa position de dégagement de l'ouverture du pavillon, comporte des moyens permettant le guidage de la glace lors de ses changements de position.

Les moyens d'articulation de la glace au cadre au niveau du bord avant 4a de la glace sont différents des glissières et cuillères précédemment décrites. Ils comportent deux languettes 3O, 31 solidaires du bord avant 2a du cadre et en projection à l'intérieur de celui-ci qui coopèrent avec des chapes 32, 33 portées par la glace. Dans sa position d'obturation, les languettes 3O, 31 sont coiffées par les chapes 32 et 33. Ces dernières possèdent un levier à came de blocage 34 qui est articulé dans chaque chape et qui en étant repoussé vers l'avant (dans le sens des aiguilles d'une montre sur la figure 8) pince la languette 3O, 31 entre deux surfaces qui autorisent un léger pivotement de la glace autour de la partie prisonnière de la languette. Une rotation des leviers 34 dans l'autre sens élimine ce pincement et la languette peut être dégagée de la chape correspondante.

En une seule pièce avec les chapes, ou par des pièces séparées, la glace est équipée latéralement au voisinage de son bord avant 4a de patins 35, 36 de glissement qui, s'ouvrant latéralement vers l'extérieur, peuvent chevaucher un rail fixe 37, 38 porté par les montants latéraux du cadre 2 et ce lorsque, et uniquement lorsque les articulations sur les pattes 3O, 31 sont libérées et dégagées par un mouvement de la glace vers l'arrière. Le mouvement ne peut d'ailleurs être réalisé que si la glace est entrebâillée pour que son bord arrière puisse échapper du bord arrière 2b du cadre. Les leviers 34, comme illustré à la figure 9, constituent alors des poignées de manoeuvre vers l'arrière de la glace.

Pour que ce coulissement soit possible il faut découpler l'extrémité 9 du vérin à vis 8 de la glace 4. Cette extrémité constitue alors un point d'appui sur lequel la glace peut glisser. Il pourrait en être ainsi avec les modes de réalisation précédemment décrits. Il est cependant préférable et mécaniquement plus satisfaisant d'équiper l'extrémité 9 du vérin 8 d'un patin de coulissement 39 logé à demeure dans une glissière 4O que porte la face inférieure de la glace 4. La longueur de cette glissière 4O est telle que pour assujettir la glace dans sa position d'obturation de l'ouverture, le patin 39 coopère avec la partie arrière de la glissière et tire la glace vers le bas contre le joint 3. Dans sa position de dégagement de l'ouverture (représentée à la figure 9) le patin 39 coopère avec la partie avant de la glissière 4O. En rétractant le vérin 8, on force l'appui de la glace par les patins 35, 36 sur les rails 37, 38 et par la glissière 4O sur le côté arrière 2b du cadre 2 qui comporte à cet endroit une garniture souple 41. Pour refermer l'ouverture, il suffit de "dévisser" le vérin 8, soulever la glace pour annuler les forces d'appui vers le bas et pousser sur les leviers 34 pour entraîner la glace vers l'avant. Le blocage des articulations avant assujettit la partie avant de la glace dans le cadre tandis que le serrage du vérin 8 plaque la partie arrière de la glace contre le joint.

Il peut être avantageux de prévoir au niveau du vérin 8 des dispositifs grâce auxquels le coulissement vers l'arrière de la glace ne peut pas intervenir si l'angle d'entrebâillement est trop grand. Le patin 39 peut par exemple affecter une forme ou être dans une matière déformable qui, au-delà d'une certaine course du vérin 8, constitue un coincement dans la glissière interdisant tout coulissement. On aura également prévu des systèmes de blocage du vérin dans son état correspondant à l'immobilisation de la glace à cheval sur le bord arrière 2b du cadre, pour éviter un desserrage sous l'effet des vibrations.

## Revendications

1. Dispositif de toit ouvrant pour véhicule automobile comprenant un cadre (2) fixé au bord d'une ouverture ménagée dans le pavillon (1) du véhicule, une glace (4) formant dans une première position un panneau d'obturation de cette ouverture, des moyens d'articulation (6) de cette glace (4), solidaires du bord avant (2a) du cadre (2) pour recevoir de manière démontable des moyens (5) correspondant fixés sur la glace (4) et des moyens (7, 8, 9) de commande en pivotement de la glace (4) autour de son articulation (5, 6) sur le cadre (2), s'étendant entre le bord arrière (2b) du cadre (2) et la glace (4) de laquelle ils peuvent être au moins partiellement séparés, caractérisé en ce que le cadre (2) et la glace (4) possèdent des moyens d'accouplement de l'un à l'autre en attente, et mis en coopération mutuelle lorsque la glace (4), découplée des moyens d'articulation (5, 6) et au moins partiellement séparée des moyens de pivotement, est placée dans une seconde position où elle chevauche le bord arrière (2b) du cadre (2).

2. Dispositif selon la revendication 1 caractérisé en ce que les moyens d'accouplement (5, 15, 10a) solidaires de la glace sont disposés au sommet d'un triangle dont l'un des côtés est parallèle au bord (2b) du cadre chevauché par la glace (4) et en ce que le cadre (2) comporte au moins deux moyens d'accouplement (13, 14, 16, 19, 21) pour coopérer avec ceux de la glace situés aux extrémités du côté parallèle au bord (2b) chevauché du cadre.

3. Dispositif selon la revendication 1 ou la revendication 2 caractérisé en ce que les moyens d'accouplement portés par la glace (4) et situés aux extrémités du côté du triangle parallèle au bord (2b) du cadre, sont constitués par ses moyens (5) d'articulation au bord avant (2a) du cadre (2), le cadre comportant au voisinage de son bord arrière les moyens correspondants (13, 14, 19) pour les recevoir.

4. Dispositif selon la revendication 1 ou la revendication 2 caractérisé en ce que les moyens d'accouplement portés par la glace (4) et situés aux extrémités du côté du triangle parallèle aux bords du cadre (2b) chevauché, comportent des crochets (15) latéraux susceptibles d'être engagés dans des crochets (16) correspondants solidaires du cadre (2) au voisinage du bord (2b) chevauché.

5. Dispositif selon la revendication 1 ou la revendication 2, caractérisé en ce que les moyens d'accouplement portés par la glace (4) et situés aux extrémités du côté du triangle parallèle au bord (2b) du cadre sont constitués par des patins (35, 36) latéraux de guidage de la glace dans des rails latéraux (37, 38) portés par le cadre, la partie arrière de ces rails constituant des moyens de réception en attente coopérant avec les patins pour l'accouplement de la glace (4) et du cadre (2) dans la seconde position de la glace.

6. Dispositif selon l'une des revendications 3 à 5, caractérisé en ce que le troisième moyen d'accouplement de la glace (4) au cadre est constitué par la partie (9) des moyens (7, 8, 9) de commande en pivotement de la glace solidaire du cadre (2) et par un moyen (10a) de son attelage à la glace porté par cette dernière en correspondance.

7. Dispositif selon la revendication 6, caractérisé en ce que le moyen d'attelage de la glace (4) aux moyens de commande (7, 8, 9) en pivotement dans la seconde position de la glace est constitué par la partie d'extrémité avant d'une glissière (4O) portée par la face inférieure de la glace (4) dans laquelle est montée à coulissement l'extrémité (9, 39) des moyens de commande en pivotement.

8. Dispositif selon la revendication 3 ou la revendication 4 caractérisé en ce que le troisième moyen d'accouplement de la glace (4) est constitué par la partie (10) de fixation des moyens de commande en pivotement de la glace (4) par rapport au cadre (2) portée par la glace (4) et par un organe (17) de son attelage porté par le pavillon (1) du véhicule au-delà du bord (2b) du cadre chevauché.

9. Dispositif selon l'une des revendications précédentes caractérisé en ce que le bord chevauché (2b) du cadre comporte des patins (21) d'appui de la glace (4).

10. Dispositif selon la revendication 1 caractérisé en ce que la glace comporte au voisinage de son bord avant (4a) une réplique (10a) des moyens de fixation des moyens de commande (7, 8, 9) de son pivotement par rapport au cadre, en ce que le bord (2b) arrière du cadre comporte sur sa face extérieure des patins d'appui (21) de la glace (4) et en ce que le pavillon (1) comporte un organe (17) pour recevoir la partie (10) portée par la glace de fixation des moyens de commande (7, 8, 9) en pivotement de cette glace par rapport au cadre.

## Claims

1. An opening roof structure for a motor vehicle, the structure comprising a frame (2) secured around the edge of an opening formed in the roof (1) of the vehicle, a window (4) which in a first position forms a panel for at least substantially closing the opening, hinge means (6) for the window (4) which are integral with the front edge (2a) of the frame (2) to removably receive corresponding means (5) secured to the window (4), and pivot control means (7, 8, 9) for pivoting the window (4) about its hinge (5, 6) to the frame (2), the control means extending between the rear edge (2b) of the frame (2) and the window (4) from which they can be separated, at least in part, the structure being characterized in that both the frame (2) and the window (4) have coupling means in waiting which are placed in mutual co-operation when, after the window (4) has been uncoupled from the hinge means (5, 6) and at least partly separated from the pivot control means, the window (4) is placed in a second position in which it overlies the rear edge (2b) of the frame (2).

2. A structure according to claim 1, characterized in that the coupling means (5, 15, 10a) in waiting integral with the window are arranged at the vertices of a triangle one of whose sides is parallel to the edge (2b) of the frame which is overlaid by the window (4), and in that the frame (2) includes at least two coupling means (13, 14, 16, 19, 21) to co-operate with said coupling means in waiting integral with the window and situated at the ends of the side of the triangle which is parallel to the overlaid edge (2b) of the frame.

3. A structure according to claim 1 or claim 2, characterized in that the coupling means carried by the window (4) and situated at those ends of the side of the triangle that is parallel to the edge (2b) of the frame, are constituted by the hinge means (5) whereby the window is hinged to the front edge (2a) of the frame (2), the frame including corresponding means (13, 14, 19) in the vicinity of its rear edge for receiving the aforementioned hinge means.

4. A structure according to claim 1 or claim 2, characterized in that the coupling means carried by the window (4) and situated at the ends of the side of the triangle that is parallel to the overlaid edge (2b) of the frame, comprise lateral hooks (15) which can be engaged in corresponding hooks (16) which are integral with the frame (2) adjacent the overlaid edge (2b).

5. A structure according to claim 1 or claim 2, characterized in that the coupling means carried by the window (4) and situated at the ends of the side of the triangle that is parallel to the edge (2b) of the frame, are constituted by lateral runners (35, 36) for guiding the window in lateral rails (37, 38) carried by the frame, the rear portions of the rails constituting coupling means in waiting which co-operate with the runners to couple together the window (4) and the frame (2) in the second position of the window.

6. A structure according to any one of claims 3 to 5, characterized in that the third means for coupling the window (4) to the frame is constituted by that portion (9) of the pivot control means (7, 8, 9) of the window which is integral with the frame (2), and by a corresponding window-carrier means (10a) for coupling the frame to the window.

7. A structure according to claim 6, characterized in that the means for coupling the window (4) to the pivot control means (7, 8, 9) in the second position of the window is constituted by the front end portion of a slide (40) which is carried on the lower surface of the window (4) and in which the free end (9, 39) of the pivot control means is slidably mounted.

8. A structure according to claim 3 or claim 4, characterized in that the third coupling means for the window (4) is constituted by that portion (10) of the pivot control means for the window (4) which is carried by the window (4) and also by a coupling member (17) for said means which is carried by the roof (1) of the vehicle beyond the overlaid edge (2b) of the frame.

9. A structure according to any of the preceding claims, characterized in that the overlaid edge (2b) of the frame includes support runners (21) for the window (4).

10. A structure according to claim 1, characterized in that in the vicinity of its front edge (4a) the window includes a duplicate (10a) of the coupling means for securing the pivot control means (7, 8, 9), and in that the rear edge (2b) of the frame includes window-supporting runners (21) on its outside face and in that the roof (1) includes a member (17) for receiving the coupling means (10) carried by the window for securing the pivot control means (7, 8, 9).

## Patentansprüche

1. Schiebedachvorrichtung für ein Kraftfahrzeug, umfassend einen Rahmen (2), der am Rand einer im Dach (1) des Fahrzeuges vorgesehenen Öffnung montiert ist, eine Glasscheibe (4), die in einer ersten Position eine Platte zum Verschließen dieser Öffnung bildet, Mittel (6) zum Anlenken der Glasscheibe (4), die am vorderen Rand (2a) des Rahmens (2) angeordnet und dazu ausgebildet sind, an der Glasscheibe (4) angeordnete entsprechende Mittel (5) lösbar aufzunehmen, sowie Mittel (7, 8, 9) zum Verschwenken der Glasscheibe (4) um ihr Gelenk (5, 6) am Rahmen (2), die sich zwischen dem hinteren Rand (2b) des Rahmens (2) und der Glasscheibe (4) erstrecken, von welcher sie zumindest zum Teil trennbar sind, dadurch **gekennzeichnet**, daß der Rahmen (2) und die Glasscheibe (4) bereitstehende Mittel zum Verbinden des Rahmens mit der Glasscheibe haben, die miteinander Zusammenwirken, wenn die von den Anlenkmitteln (5, 6) abgekoppelte und von den Mitteln zum Verschwenken zumindest zum Teil getrennte Glasscheibe (4) eine zweite Position einnimmt, in der sie den hinteren Rand (2b) des Rahmens (2) überdeckt.

2. Vorrichtung nach Anspruch 1, dadurch **gekennzeichnet**, daß die an der Glasscheibe angeordneten Verbindungsmittel (5, 15, 10a) an der Spitze eines Dreiecks liegen, dessen eine Seite parallel zum von der Glasscheibe (4) überdeckten Rand (2b) des Rahmens ist, und daß der Rahmen (2) mindestens zwei Verbindungsmittel (13, 14, 16, 19, 21) hat, die dazu ausgebildet sind, mit den Verbindungsmitteln der Glasscheibe zusammenzuwirken, die an den Enden der parallel zum überdeckten Rand (2b) des Rahmens liegenden Seite vorgesehen sind.

3. Vorrichtung nach Anspruch 1 oder Anspruch 2, dadurch **gekennzeichnet**, daß die an der Glasscheibe (4) angeordneten Verbindungsmittel, die an den Enden der parallel zum Rand (2b) des Rahmens liegenden Seite des Dreiecks vorgesehen sind, durch die Mittel (5) zum Anlenken der Glasscheibe am vorderen Rahmen (2a) des Rahmens (2) gebildet sind, wobei der Rahmen in der Nachbarschaft seines hinteren Randes entsprechende Mittel (13, 14, 19) zum Aufnehmen dieser Verbindungsmittel hat.

4. Vorrichtung nach Anspruch 1 oder Anspruch 2, dadurch **gekennzeichnet**, daß die an der Glasscheibe (4) angeordneten Verbindungsmittel, die an den Enden der parallel zum überdeckten Rand (2b) des Rahmens liegenden Seite des Dreiecks vorgesehen sind, seitliche Haken (15) umfassen, die dazu ausgebildet sind, mit entsprechenden Haken (16) in Eingriff zu treten, die am Rahmen (2) in der Nachbarschaft des überdeckten Randes (2b) angeordnet sind.

5. Vorrichtung nach Anspruch 1 oder Anspruch 2, dadurch **gekennzeichnet**, daß die an der Glasscheibe (4) angeordneten Verbindungsmittel, die an den Enden der parallel zum Rand (2b) des Rahmens liegenden Seite des Dreiecks vorgesehen sind, als seitliche Gleitschuhe (35, 36) zum Führen der Glasscheibe in am Rahmen angeordneten seitlichen Schienen (37, 38) ausgebildet sind, wobei der hintere Teil der Schienen bereitstehende Aufnahmemittel bildet, die mit den Gleitschuhen Zusammenwirken, um die Glasscheibe (4) und den Rahmen (2) in der zweiten Position der Glasscheibe miteinander zu verbinden.

6. Vorrichtung nach einem der Ansprüche 3 bis 5, dadurch **gekennzeichnet**, daß das dritte Mittel zum Verbinden der Glasscheibe (4) mit dem Rahmen von dem mit dem Rahmen (2) verbundenen Teil (9) der Mittel (7, 8, 9) zum Verschwenken der Glasscheibe sowie von einem Mittel (10a) zum Koppeln dieses Teils mit der Glasscheibe gebildet ist, welches an der Glasscheibe entsprechend angeordnet ist.

7. Vorrichtung nach Anspruch 6, dadurch **gekennzeichnet**, daß das Mittel zum Koppeln der Glasscheibe (4) mit den Mitteln (7, 8, 9) zum Verschwenken in der zweiten Position der Glasscheibe von einem vorderen Endabschnitt einer an der Unterseite der Glasscheibe (4) vorgesehenen Führungsschiene (40) gebildet ist, in der das Ende (9, 39) der Mittel zum Verschwenken gleitend gelagert ist.

8. Vorrichtung nach Anspruch 3 oder Anspruch 4, dadurch **gekennzeichnet**, daß das dritte Mittel zum Verbinden der Glasscheibe (4) von dem an der Glasscheibe (4) angeordneten Teil (10) zum Befestigen der Mittel zum Verschwenken der Glasscheibe (4) relativ zum Rahmen sowie von einem am Dach (1) des Fahrzeugs jenseits des überdeckten Randes (2b) des Rahmens angeordneten Element (17) zum Koppeln dieses Teils gebildet ist.

9. Vorrichtung nach einem der vorhergehenden Ansprüche, dadurch **gekennzeichnet**, daß der überdeckte Rand (2b) des Rahmens Stützen (21) zum Auflegen der Glasscheibe (4) hat.

10. Vorrichtung nach Anspruch 1, dadurch **gekennzeichnet**, daß die Glasscheibe in der Nachbarschaft ihres vorderen Randes (4a) eine Nachbildung (10a) der Mittel zum Befestigen der Mittel (7, 8, 9) zum Verschwenken der Glasscheibe relativ zum Rahmen hat, daß der hintere Rand (2b) des Rahmens an seiner Außenseite Stützen (21) zum Auflegen der Glasscheibe (4) hat, und daß das Dach (1) ein Element (17) zum Aufnehmen des an der Glasscheibe angeordneten Teils (10) zum Befestigen der Mittel (7, 8, 9) zum Verschwenken der Glasscheibe relativ zum Rahmen hat.
